# EUROPEAN PATENT APPLICATION

(11) **EP 4 556 318 A1**
(43) Date of publication of application: **21.05.2025**
(21) Application number: 22950999.7
(22) Date of filing: 11.07.2022
(51) Int. Cl.: B60R 16/04, B60L 8/00

(54) **SOLAR POWER GENERATOR FOR VEHICLE**

(71) Applicant: NISSAN MOTOR CO., LTD., Kanagawa 221-0023 (JP)
(72) Inventor: INOUE, Junichi, Atsugi-shi, Kanagawa 243-0123 (JP); ABE, Keita, Atsugi-shi, Kanagawa 243-0123 (JP); AOYAMA, Kazuki, Atsugi-shi, Kanagawa 243-0123 (JP); YAMADA, Yoshiho, Atsugi-shi, Kanagawa 243-0123 (JP)
(74) Representative: Hoefer & Partner Patentanwälte mbB
(86) International application number: PCT/JP2022/027183
(87) International publication number: WO 2024/013778

(57) **Abstract**

A solar power generation device for vehicles is to be installed on a base carrier on the roof of a vehicle, and includes a frame, clamps to secure the frame to the base carrier, slide rails, and a solar power generation panel. The solar power generation panel includes a fixed solar panel that is fixed at the uppermost part of the frame, and a movable solar panel that is located under the fixed solar panel. The slide rails include a fixed rail that is fixed on the frame, and a movable rail that supports the movable solar panel and extract and retract the movable solar panel. This makes it possible to provide a solar power generation device for vehicles that can increase the amount of power generated by the solar power generation panel while preventing deterioration of design quality.

## Description

### TECHNICAL FIELD

The present invention relates to a solar power generation device for vehicles, and more particularly, to a solar power generation device for vehicles that can be retrofitted to an electric vehicle.

### BACKGROUND OF THE INVENTION

Electric vehicles such as EVs and PHVs that can be charged from an external power source are known. These vehicles are installed with solar power generation panels on the roofs or elsewhere, and electricity generated by sunlight received by the solar power generation panels is supplied to the driving batteries and auxiliary batteries.

### RELATED ART LITERATURE

### Patent Literature

Patent Literature 1 : Japan Patent Publication No. 2014-165948

### SUMMARY OF THE INVENTION

### Technical Problem

However, if a solar power generation panel is installed only on the roof of a vehicle, the amount of electricity generated by the solar power generation panel is limited, and if a solar power generation panel is also installed on the hood or side surfaces of the vehicle, the design quality of the vehicle declines.

The present invention has been made in consideration of the problems associated with such conventional technology, and it is an objective of the present invention to provide a solar power generation panel that is installed only on the roof of a vehicle and can increase the amount of power generated by the solar power generation panel while preventing a decrease in design quality of the vehicle.

### Solution to Problem

As a result of extensive research into achieving the above-mentioned objective, the inventors discovered that the above-mentioned objective could be achieved by providing, in addition to a solar power generation panel fixed to the roof of a vehicle, a solar power generation panel that is movable, that is, can be extracted from and retracted to a storage location, and thus completed the present invention.

That is, a solar power generation device for vehicles of the present invention is a solar power generation device installed on a base carrier on the roof of a vehicle, and includes a frame that is a storage location, clamps to secure the frame to the base carrier, slide rails, and a solar power generation panel.
The solar power generation panel includes a fixed solar panel fixed to the frame and located at the uppermost part of the frame, and a movable solar panel located under the fixed solar panel.
The slide rails include a fixed rail that is fixed to the frame and a movable rail that supports the movable solar panel and allows the movable solar panel to be extracted from and be retracted to the frame.

### Advantageous Effect of the Invention

According to the present invention, since a solar power generation device for vehicles includes a fixed solar panel and a movable solar panel that is located under the fixed solar panel, supported by slide rails and can be extracted from and retracted to a frame, it is possible to provide a solar power generation device for vehicles that can increase the amount of power generated by the solar power generation panel while preventing a decrease in design quality.

### BRIEF DESCRIPTION OF THE DRAWINGS

FIG. 1 is a schematic diagram illustrating an example of a solar power generation device for vehicles of the present invention in the state that a movable solar panel is retracted.
FIG. 2 is a schematic diagram illustrating an example of a solar power generation device for vehicles of the present invention in the state that a movable solar panel is extracted.
FIG. 3 is a schematic diagram illustrating an example of a solar power generation device for vehicles of the present invention, including a plurality of movable solar panels.
FIG. 4 is a diagram illustrating a system configuration of a solar power generation device for vehicles of the present invention.

### DESCRIPTION OF EMBODIMENTS

A solar power generation device for vehicles of the present invention will be described in detail.
A solar power generation device for vehicles is a retrofittable solar power generation device for vehicles of the present invention that is installed on a base carrier on the roof of a vehicle, can be used as is without modifying the charging system of the vehicle, and includes a frame, clamps that secure the frame to the base carrier, slide rails, and a solar power generation panel.

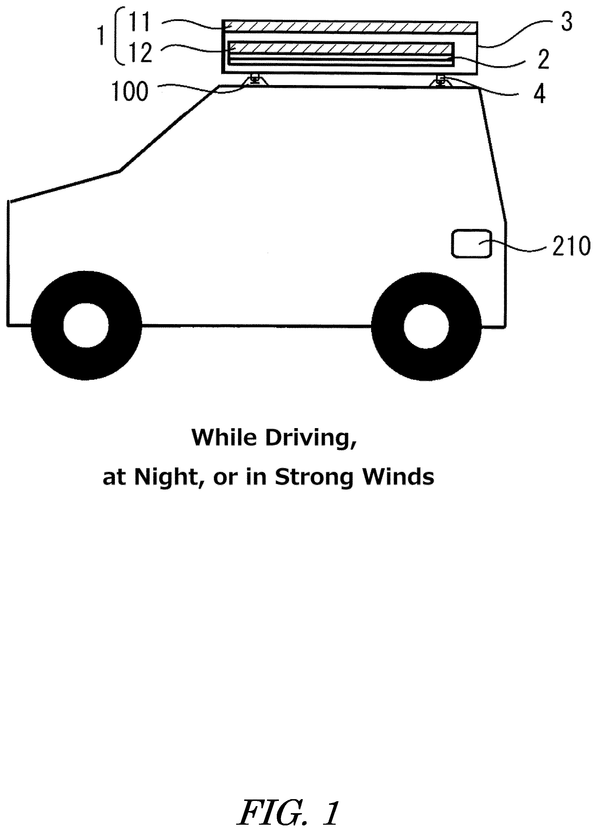

As illustrated in FIG. 1, the solar power generation panel includes multiple solar power generation panels arranged approximately parallel to one another in the vertical direction, and includes: a fixed solar panel fixed at the uppermost part of a frame; and a movable solar panel that is installed under the fixed solar panel and can be extracted from and retracted to the frame.

The slide rails include a fixed rail fixed to the frame and a movable rail supporting the movable solar panel, and the movable rail slides to extract and retract the movable solar panel.

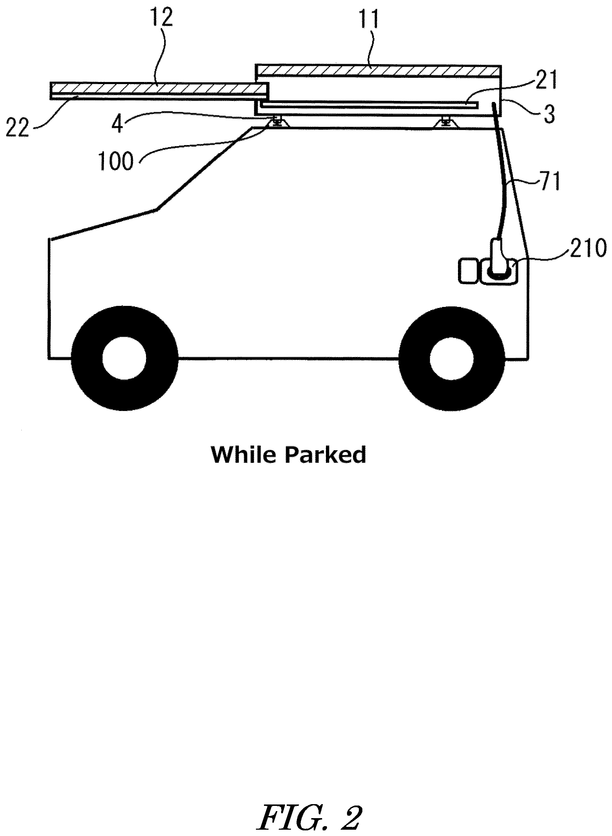

As illustrated in FIG. 2, the movable solar panel, while extracted, protrudes from the fixed solar panel and is exposed, so the solar panel area can be increased in parking, thereby enhancing the solar power generation capacity. Also, as illustrated in FIG. 1, the movable solar panel tucks under the fixed solar panel while stored, so an increase in air resistance during driving or in strong winds can be prevented, and the movable solar panel can be prevented from being damaged by wind resistance.

Furthermore, in an embodiment of the present invention, a solar power generation device for vehicles is attached to the base carrier of the roof of the vehicle by means of clamps, so that the device can be easily attached to and detached from the vehicle.

Therefore, for example, when driving on a highway for a long time, if it is expected that the amount of power consumed due to increased air resistance will be greater than the amount of power generated by sunlight, the solar power generation device for vehicles can be easily removed. Also, when a vehicle is parked for a long time, such as when camping, the solar power generation device for vehicles can be easily installed on the vehicle to use solar power generated by the device.

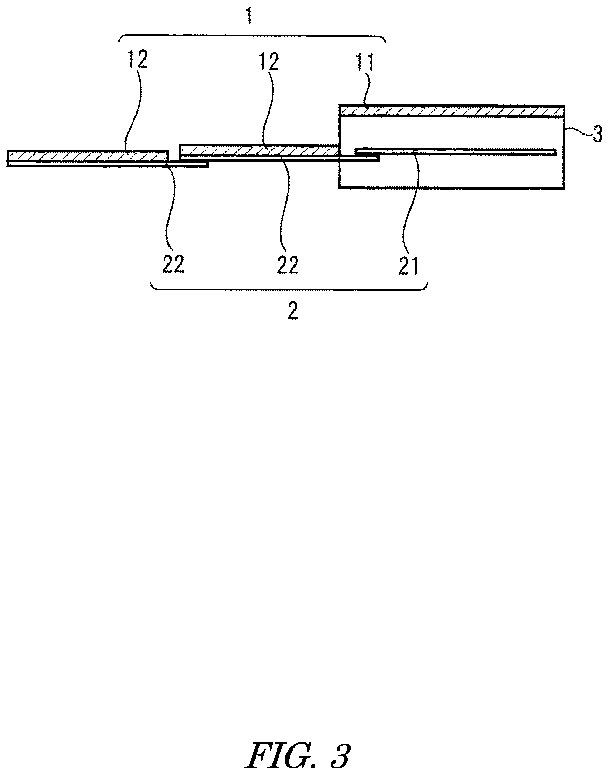

As illustrated in FIG. 3, the number of movable solar panels is not limited to one. The movable solar panels may be arranged in layers depending on the required area of the solar power generation panel.

The solar power generation device for vehicles described above preferably includes a housing. By housing the slide rails and the movable solar panel in the housing, it is possible to prevent wind from entering between the fixed solar panel and the movable solar panel while stored, thus it is possible to reduce wind noise during driving.

If the housing has waterproof property, it is possible to prevent failure of electronic devices such as the control device and corrosion or dirt on various parts such as the slide rails, which are described below.

The housing may be a separate part from the frame, or may be a part formed integrally with the frame. The upper surface of the housing may be formed by a fixed solar panel.

The movable solar panel may be extracted in the forward direction of the vehicle to be exposed outside the housing, or may be extracted to the side direction of the vehicle to be exposed outside the housing.

If the movable solar panel is extracted in the forward direction of the vehicle, the panel acts as a canopy that prevents sunlight from entering the vehicle through the windshield, thereby suppressing an increase in temperature inside the vehicle and reducing discomfort when getting in the vehicle. In addition, if the movable solar panel is extracted in the side direction of the vehicle, the panel provides shade around the side area of the vehicle.

When the movable solar panel is extracted in the forward direction of the vehicle, since the panel is located above the driver's line of sight and is easily overlooked, a stopping part is provided on the slide rails so that the tip of the movable solar panel does not protrude forward beyond the tip of the vehicle. This helps to avoid the risk of other vehicles colliding with the movable solar panel while parked.

The slide rails preferably include a slide lock mechanism and a spring biasing the movable solar panel in a direction for storing the movable solar panel.

The slide lock mechanism prevents the movable solar panel from being retracted in the housing by the spring when the movable solar panel is extracted and exposed, and by simply manually releasing the slide lock mechanism, the spring that is biased allows the movable solar panel to be easily retracted and stored inside the housing.

Furthermore, even if any abnormal event occurs, the movable solar panel can be stored within the housing simply by releasing the slide lock mechanism, so that the movable solar panel can be stored quickly and easily, and danger in the abnormal event can be reduced.

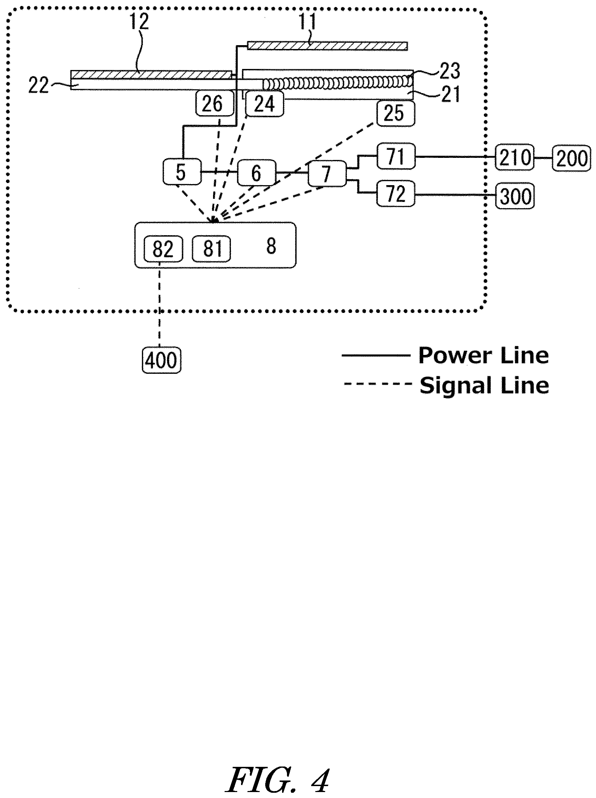

The solar power generation device for vehicles described above may include, in the housing, a storage battery, a solar charger, a power conversion device, an actuator, a charging cable, and a control device for operating the above devices and instruments, as necessary. A diagram of a system configuration in an embodiment of the solar power generation device for vehicles is illustrated in FIG. 4.

The control device may be configured to extract and retract the movable solar panel by the actuator that is provided on the slide rails. This makes it possible to automatically extract and retract the movable solar panel according to the situation.

For example, the control device is configured to extract the movable solar panel so that the movable solar panel is exposed, while power is being generated based on the amount of power generated by the solar power generation panel. This allows the amount of power generated to increase. The control device is configured to store the movable solar panel, while power is not being generated, such as at night or in rainy weather. This prevents the movable solar panel from accidentally breaking down.

In addition, when detecting that the distortion value of the slide rails is equal to or greater than a predetermined distortion value using a distortion sensor or a pressure sensor installed on the slide rails, the control device is configured to store the movable solar panel, thereby preventing the movable solar panel from being blown away by strong winds and being damaged.

Furthermore, if the slide rails are equipped with the slide lock mechanism and the spring in addition to the actuator, even if the actuator breaks down, the movable solar panel can be stored by manually or by a control device releasing the slide lock mechanism.

The solar power generation device for vehicles described above may be provided with a storage battery within the housing.
If the solar power generation device for vehicles itself includes a storage battery, the device can store the power generated by the solar power generation panel, making it possible to supply power even when the solar power generation panel is not generating power.

When detecting that the value of the amount of electricity stored in the storage battery is equal to or greater than the upper charging limit value, the control device is configured to stop the supply of electricity generated by the solar power generation panel to the storage battery. This prevents the storage battery from being overcharged and breaking down. The amount of electricity stored in the storage battery can be known from the voltage value of the storage battery.

When stopping charging the storage battery from the solar power generation panel, the control device is preferably configured to store the movable solar panel by the actuator, thereby preventing unintentional breakdown of the movable solar panel.

As illustrated in FIG. 4, the solar power generation panel and the storage battery are connected through a solar charger. The control device is configured to control the output voltage and current of the solar power generation panel using the solar charger to perform the maximum power point tracking control of the solar power generation panel, and also to step down the voltage of power generated by the solar power generation panel to a level that can be charged into the storage battery to charge to the storage battery.

The solar power generation device for vehicles described above may include a power conversion device within the housing.
The power conversion device can convert the voltage of the storage battery into a voltage appropriate to the external power supply destination and supply the power having the appropriate voltage to the destination.

Examples of supply voltages include DC 48V, DC 20V, and DC 12V for charging the driving battery and auxiliary battery of an electric vehicle, as well as AC 100V and AC 200V for supplying power to home electrical appliances.

It is preferable that the control device is configured to stop the supply of power to the outside, when detecting that the value of the amount of electricity in the storage battery is less than a lower discharge limit value. This prevents the storage battery from being over-discharged and accelerating deterioration.

The solar power generation device for vehicles described above preferably includes a charging cable that can be connected to a charging port of the vehicle. By connecting the solar power generation device for vehicles to the charging port of the vehicle with a charging cable that passes outside the vehicle, it becomes possible to supply power from the storage battery to a driving battery and an auxiliary battery of the vehicle through the power conversion device, thereby extending the driving range of the vehicle.

The charging cable may be fixedly connected to the power conversion device, or may be a detachable cable that can be connected to the power conversion device.
In addition, if the charging cable of the solar power generation device for vehicles installed on the vehicle is long enough to reach charging ports on other vehicles, the solar power generation device for vehicles can supply electric power not only to the vehicle on which the solar power generation device for vehicles is mounted, but also to other vehicles.

While the charging cable is connected to the charging port of the vehicle, it is preferable that the control device is configured to convert the voltage of electricity of the storage battery and to supply power to the outside, if detecting that the voltage value of electricity stored in the storage battery is equal to or greater than the voltage value at the start of charging.
Then, when detecting that power is supplied to the lower discharge limit, the control device is configured to stop the supply of power to the outside, and when detecting that electricity to be stored in the storage battery is restored by the solar power generation panel and reaches equal to or greater than the voltage value at the start of charging, the control device is configured to resume supplying power to the outside. Note that the voltage value at the start of charging is lower than the voltage value of the upper limit for charging.

As a result, even if the storage battery has a low stored electricity level and is unable to charge the driving battery and the like of the vehicle, if the charging cable is connected to the charging port of the vehicle, the driving battery can be automatically charged while the solar power generation panel generates power and the stored electricity level of the storage battery is high.

In addition, it is preferable that the control device is configured to extract the movable solar panel to increase the amount of power generated by the solar power generation panel while the charging cable is connected to the charging port of the vehicle, and to retract the movable solar panel while the charging cable is disconnected from.

By extracting and retracting the movable solar panel depending on whether or not the charging cable is connected to the charging port of a vehicle, it is possible to automatically extract and retract the movable solar panel without extracting the movable solar panel while the vehicle is stopped for a short time.

The solar power generation device for vehicles described above is preferably provided with a residential outlet, which allows the use of general household electrical appliances.

The housing is preferably provided with cooling fins, which allow heat generated by electronic devices, such as a power conversion device and a control device, to release to the outside of the housing. This prevents the electronic devices from being damaged.

Furthermore, if cooling fins are provided on the underside of the housing, the electronic devices can be cooled by the wind flowing between the housing and the roof of the vehicle, thereby preventing the design quality from being degraded.

The control device preferably includes a memory unit. The memory unit stores, over time, the amount of power generated by the solar power generation panel, the amount of electricity in the storage battery, the amount of power supplied to the outside, the date and time when the charging cable was connected to the charging port, and so on.

This allows the control device to predict the power usage pattern of the user of the solar power generation device for vehicles. If predicting that the amount of power to be supplied to the outside will increase, the control device is configured to extract the movable solar panel of the solar power generation panel to increase the amount of electricity stored in the storage battery. This enables to prepare for the supply of power to the outside.

In addition, while the charging cable is connected to the charging port of the vehicle, the control device is configured to terminate the supply of power from the storage battery to the driving battery by the time when the charging cable is to be removed from the charging port, which is predicted from the data stored in the memory unit, i.e., the time when the user is predicted to start driving the vehicle.

The control device is configured so as that the storage battery supplies power to the driving battery until the battery charge in the storage battery reaches the lower discharge limit of the storage battery, thereby preventing the storage battery from storing excess power while the vehicle is moving. This makes it possible to extend the driving range of the vehicle.

In addition, while the vehicle is moving, solar power is generated by the fixed solar panels, increasing the amount of electricity in the storage battery. This makes it possible to use the electricity soon upon arrival.

The control device preferably includes a communication unit. The communication unit communicates with an external device such as a smartphone via a mobile phone line, Wi-Fi, Bluetooth, or the like.

The control device is configured to transmit data stored in the memory unit in response to a request from an external device connected via wireless communication. This enables a user to know from the external device data such as the amount of electricity stored in the storage battery.

It is also possible that the external device transmits instructions to the control device to supply electricity from the storage battery to the driving battery of the vehicle.

While the charging cable is connected to the charging port of the vehicle, if receiving instructions from an external device to supply electricity from the storage battery to the driving battery of the vehicle, the control device is configured to operate such supply.

As a result, even when a solar power generation device for vehicles is used in a manner different from the pattern of connecting the charging cable to the charging port, which is stored in the memory unit, the power of the storage battery can be transferred to the driving battery and the amount of electricity stored in the storage battery can be reduced to the lower discharge limit by the time the user plans to drive the vehicle, thereby extending the driving range of the vehicle.

### REFERENCE SIGNS LIST

- 1: solar power generation panel
- 11: fixed solar panel
- 12: movable solar panel
- 2: slide rail
- 21: fixed rail
- 22: movable rail
- 23: spring
- 24: slide lock mechanism
- 25: actuator
- 26: distortion sensor (pressure sensor)
- 3: frame (housing)
- 4: clamp
- 5: solar charger
- 6: storage battery
- 7: Power conversion device
- 71: charging cable
- 72: residential outlet
- 8: control device
- 81: memory unit
- 82: communication unit
- 100: base carrier
- 200: driving battery
- 210: charging port
- 300: home electrical appliance
- 400: external device

## Claims

1. A Solar power generation device for vehicles, to be installed on a base carrier on a roof of a vehicle, the device comprising:
a frame;
clamps, the clamps to secure the frame to the base carrier;
slide rails; and
a solar power generation panel;
wherein
the solar power generation panel includes:
a fixed solar panel, the fixed solar panel being fixed to the frame and located at an uppermost part of the frame; and
a movable solar panel, the movable solar panel being located under the fixed
solar panel;
the slide rails include:
a fixed rail, the fixed rail being fixed on the frame; and
a movable rail, the movable rail supporting the movable solar panel and extracting and retracting the movable solar panel.

2. The solar power generation device for vehicles according to claim 1, further comprising a housing,
wherein
at least the slide rails and the movable solar panel can be retracted in the housing, the movable solar panel is extracted forward of the vehicle from the housing to be exposed outside the housing, and
a stopping part provided on the slide rails prevents a leading end of the movable solar panel from protruding forward beyond the leading end of the vehicle.

3. The solar power generation device for vehicles according to claim 1, further comprising a housing,
wherein
at least the slide rails and the movable solar panel can be retracted in the housing, and
the movable solar panel is extracted in a side direction of the vehicle from the housing to be exposed outside the housing.

4. The solar power generation device for vehicles according to claim 1, further comprising a housing,
wherein
at least the slide rails and the movable solar panel can be retracted in the housing, the slide rails are provided with
a slide lock mechanism, and
a spring biased in a direction to retract the movable solar panel to the housing, and
the movable solar panel is retracted to the housing by releasing the slide lock mechanism.

5. The solar power generation device for vehicles according to claim 1, further comprising a housing,
wherein
at least the slide rails and the movable solar panel can be retracted in the housing, the housing includes a control device and an actuator,
the actuator is provided on the slide rails, and
the control device is configured to extract and retract the movable solar panel from and to the housing by the actuator.

6. The solar power generation device for vehicles according to claim 5,
wherein
the control device is configured to extract and retract the movable solar panel by the actuator, on the basis of the amount of power generated by the solar power generation panel.

7. The solar power generation device for vehicles according to claim 5,
wherein
the control device is configured to retract the movable solar panel by the actuator when the distortion value of the slide rails is equal to or greater than a predetermined distortion value.

8. The solar power generation device for vehicles according to claim 5,
wherein
the housing includes a storage battery, and
the storage battery stores the power generated by the solar power generation panel.

9. The solar power generation device for vehicles according to claim 8,
wherein
the control device is configured to stop charging the storage battery from the solar power generation panel when an amount of power charged in the storage battery is equal to or greater than an upper charge limit.

10. The solar power generation device for vehicles according to claim 9,
wherein
the control device is configured to retract the movable solar panel by the actuator when charging of the storage battery from the solar power generation panel is stopped.

11. The solar power generation device for vehicles according to claim 9,
wherein
the housing includes a power conversion device, and
the power conversion device is configured to convert a voltage of power of the storage battery and supply the power converted to an external device.

12. The solar power generation device for vehicles according to claim 11,
wherein
the control device is configured to stop supplying power to the external device when an amount of power charged in the storage battery is under a lower discharge limit.

13. The solar power generation device for vehicles according to claim 12, further comprising a charging cable to be connected to a charging port of the vehicle.

14. The solar power generation device for vehicles according to claim 12,
wherein
while the charging cable is connected to the charging port of the vehicle, the control device is configured to issue instructions to convert a voltage of power of the storage battery and supply power to the external device if the voltage of power of the storage battery is equal to or greater than a charging-start voltage.

15. The solar power generation device for vehicles according to claim 12, further comprising a residential outlet.

16. The solar power generation device for vehicles according to claim 12,
wherein
the housing includes cooling fins.

17. The solar power generation device for vehicles according to claim 12,
wherein
the control device includes a memory unit, and
the memory unit stores data on an amount of power generated by the solar power generation panel, an amount of power stored in the storage battery, an amount of power supplied to the external devices, and date and time when the charging cable is connected to the charging port, over time.

18. The solar power generation device for vehicles according to claim 17,
wherein
while the charging cable is connected to the charging port of the vehicle, the control device is configured to terminate the supply of power from the storage battery to a driving battery of the vehicle by a time when the amount of power of the driving battery of the vehicle is predicted to start decreasing, based on a pattern of connecting the charging cable to the charging port, which is predicted from data stored in the memory unit.

19. The solar power generation device for vehicles according to claim 17,
wherein
the control device includes a communication unit, and
the control device is configured to transmit data stored in the memory unit to an external device using the communication unit.

20. The solar power generation device for vehicles according to claim 19,
wherein
while the charging cable is connected to the charging port of the vehicle, the control device is configured to supply power from the storage battery to the driving battery of the vehicle, if receiving instructions from the external device.
